Europäisches Patentamt

European Patent Office

Office européen des brevets

(11) Numéro de publication: **0 082 911**

**A1**

(12) **DEMANDE DE BREVET EUROPEEN**

(21) Numéro de dépôt: 81870056.9

(22) Date de dépôt: 30.12.81

(51) Int. Cl.³: **B 23 C 3/30**

(43) Date de publication de la demande:
06.07.83 Bulletin 83/27

(84) Etats contractants désignés:
AT BE CH DE FR GB IT LI LU NL SE

(71) Demandeur: Sevrin, Alain E.F.G.
113, Avenue Van Volxem
B-1190 Bruxelles(BE)

(72) Inventeur: Sevrin, Alain E.F.G.
113, Avenue Van Volxem
B-1190 Bruxelles(BE)

(74) Mandataire: Prignot, Jean et al,
OFFICE HANSSENS SPRL Square Marie-Louise, 40 - bte 19
B-1040 Bruxelles(BE)

(54) **Procédé et dispositif pour la réalisation de rainures dans des plaques de matière rigide, à faible densité, ayant tendance à l'arrachage.**

(57) L'invention a pour objet un procédé pour la réalisation de rainures dans des plaques de matière rigide à faible densité, ayant tendance à l'arrachage, dans lequel la rainure est réalisée par un fraisage de profil en avalant, alors que la plaque est soumise à une action de retenue au cours de son avance sur la table. L'invention concerne également un dispositif pour la réalisation de ce procédé, qui comprend une table fixe (1), présentant un moyen de guidage (15, 15') d'une plaque à usiner, ainsi que, au-dessus et parallèlement à la dite table, un arbre (4) dont sont solidaires des fraises (5) disposées de profil et entraînées pour réaliser un fraisage en avalant, des rouleaux (13, 13') étant prévus pour maintenir la plaque au contact de la table au cours de son avance.

FIG 6

Croydon Printing Company Ltd

La présente invention a pour objet un procédé pour la réalisation de rainures dans des plaques de matière rigide de faible densité, ayant tendance à l'arrachage, ainsi que le dispositif pour la réalisation de ce procédé.

Le procédé et le dispositif de l'invention s'appliquent particulièrement au travail de plaques de mousses rigides, telles que des mousses de polyuréthane, de polyisocyanurate ou certaines mousses phénoliques, éventuellement aussi aux mousses de polystyrène, qui toutefois se travaillent facilement à la chaleur.

Plus particulièrement, le procédé et le dispositif de l'invention conviennent à la réalisation de rainures dans des plaques comportant un revêtement résistant supportant le pliage, tel que feuille de papier ou d'aluminium, revêtement de fibre de verre, etc., en vue de la constitution, à partir d'une plaque, de corps parallélépipédiques.

Au cours de ces dernières années, s'est développée une technique de réalisation de conduits isolants, destinés notamment à véhiculer de l'air chaud ou tiède. De tels conduits ont d'abord été réalisés en assemblant chant sur plat des panneaux de matière mousse rigide ayant les dimensions des côtés du conduit à réaliser. Ensuite, on a réalisé ces conduits en formant dans des plaques dont la largeur correspond au périmètre du conduit, des rainures longitudinales en V d'angle au sommet de 90°, ces rainures étant formées au droit des arêtes du conduit. En pliant la plaque et en encollant les parois des rainures, on obtient ainsi un conduit de forme générale parallélépipédique. C'est à cette dernière technique que se rapporte l'invention.

Pour que les qualités d'isolation de ces conduits soient garanties au droit des pliages des arêtes, et que le pliage de la plaque se fasse convenablement, il importe que les rainures soient de section constante, et que leur sommet se situe à une distance constante de la face sur laquelle se constituent les arêtes.

Divers procédés et dispositifs ont été proposés et utilisés à ce jour, dont aucun n'a donné entière satisfaction.

C'est ainsi qu'il a déjà été proposé de réaliser les rainures à la main, à l'aide d'un rabot que l'on déplace le long d'un guide, mais cette méthode ne permet pas la réalisation de rainures de forme constante, dont le sommet se situe à une distance constante de la face non rainurée; elle est de plus inapplicable au travail de plaques de relativement grande épaisseur (3,4 cm); il a aussi été proposé de déplacer les plaques à l'encontre de couteaux fixes portés par un support, mais l'effort de poussée sur la plaque qu'exige ce dispositif est extrêmement important, et la profondeur des rainures n'est pas garantie.

Une autre méthode utilisée à ce jour consiste à déplacer la plaque sur une table à l'encontre d'une fraise faisant saillie de la table à la manière d'une toupie. Etant donné toutefois que les tolérances de fabrication de telles plaques sont relativement larges, il est très difficile, vu les variations d'épaisseur des plaques, de garantir à la plaque une épaisseur constante entre le sommet de la rainure réalisée et la face non rainurée, et les arêtes des conduits réalisés suivant cette méthode ne présentent de ce fait pas toujours le fini désiré.

C'est donc un but de la présente invention de fournir un procédé et un dispositif permettant de manière fiable la réalisation de rainures de section constante, dont le sommet se situe à distance constante de la face non rainurée, dans des plaques de matière mousse rigide ayant tendance à l'arrachage.

Un autre but de l'invention est de fournir un dispositif peu coûteux et d'utilisation très souple, acceptant des plaques de largeur et d'épaisseur différentes pour la réalisation de conduits de sections diverses, et ne nécessitant qu'un minimum de réglages pour le passage d'un écartement de rainures à l'autre, ainsi que pour le passage d'une épaisseur de plaque à l'autre.

Ces buts sont atteints, suivant l'invention, en mettant en oeuvre un procédé de réalisation de rainures dans des plaques de matière rigide à faible densité, ayant tendance à l'arrachage, dans lequel la plaque est posée sur une

**0082911**

table fixe, sur laquelle elle se déplace, en étant guidée, à l'encontre d'au moins une fraise dont la partie active présente le profil de la rainure à réaliser, procédé qui se caractérise en ce que la rainure est réalisée par un fraisage de profil en avalant, alors que la plaque est soumise à une action de retenue au cours de son avance sur la table.

L'invention a également pour objet un dispositif pour la réalisation de ce procédé, qui comprend une table fixe présentant un moyen de guidage de la plaque, un support agencé au-dessus de et parallèlement à la table, dans le sens transversal par rapport à l'avancement de la plaque, support dont est solidaire au moins une fraise disposée de profil et entraînée pour réaliser un fraisage en avalant, et au moins un organe de pression prévu en amont de l'outil pour maintenir la plaque au contact de la table au cours de son avance.

L'invention sera mieux comprise en se reportant à la description en même temps qu'au dessin annexé, qui représente, uniquement à titre d'exemple, divers modes de réalisation de l'invention, et dans lequel :

- la figure 1 est une vue de face, partiellement en coupe, d'un dispositif pour la réalisation du procédé de l'invention,

- la figure 2 est une vue de profil, en coupe, du dispositif de la figure 1,

- la figure 3 est une vue de profil d'un mode de réalisation préféré d'un outil utilisable dans le dispositif des figures 1 et 2,

- la figure 4 est une vue de face de l'outil représenté en figure 3,

- la figure 5 représente un corps parallélépipédique pouvant être obtenu à partir d'une plaque usinée à l'aide du dispositif de l'invention,

- la figure 6 est une vue en perspective avec arrachement partiel, d'un autre mode de réalisation d'un dispositif de l'invention.

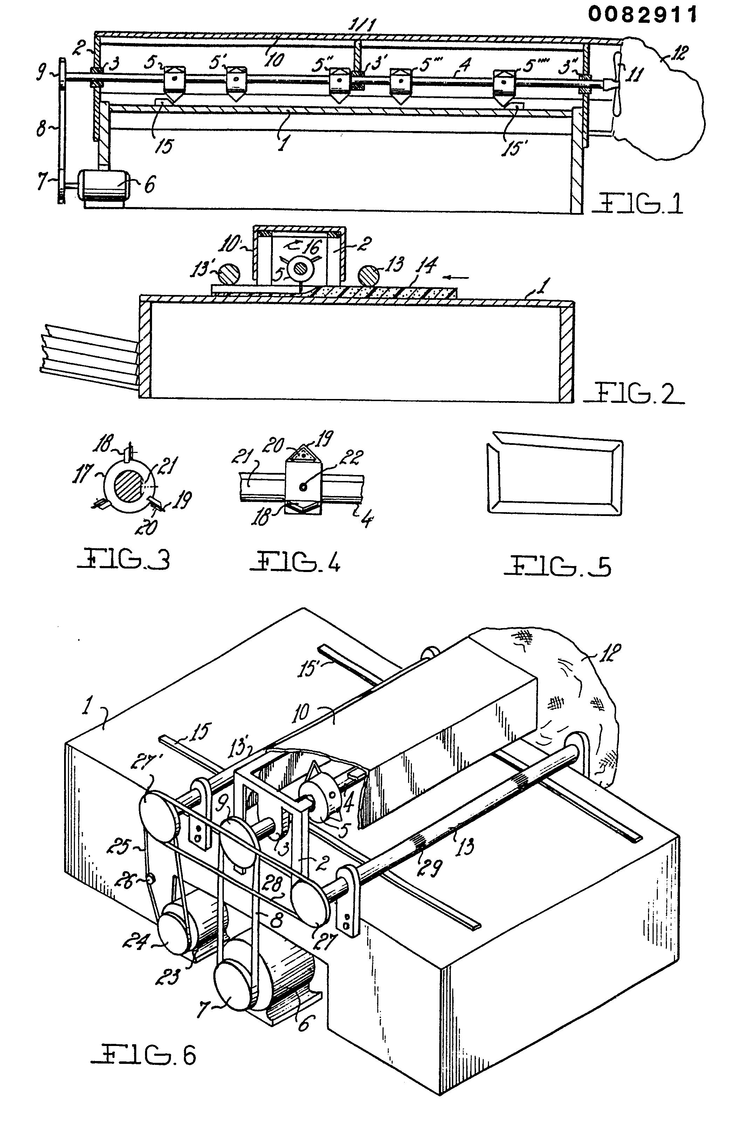

En se reportant plus particulièrement au mode de réalisation représenté aux figures 1 et 2, le dispositif de l'invention comprend une table 1, à laquelle est fixé un bâti 2 portant des paliers 3, 3', 3" dans lesquels tourillonne un arbre 4. Des fraises 5, 5', 5", 5"' et 5"", solidaires de l'arbre, sont écartées l'une de l'autre d'une distance telle que l'espacement entre le sommet de deux fraises consécutives corresponde à la largeur d'un côté du corps parallélépipédique que l'on désire constituer. L'arbre 4 est entraîné en rotation par un moteur 6 par l'intermédiaire d'un dispositif d'entraînement, schématiquement représenté par une poulie 7, une courroie 8 et une poulie 9 fixée à l'extrémité de l'arbre 4. Un capot 10 assure la sécurité des parties en mouvement et constitue conduit d'évacuation des copeaux aspirés par une hélice 11, agencée à l'extrémité de l'arbre 4 opposée à la poulie 9, d'où ils sont amenés à un sac de réception 12.

En se reportant plus particulièrement à la figure 2, on remarquera que de part et d'autre du capot sont prévus des rouleaux 13, 13' destinés à maintenir la plaque 14 soumise à l'action des fraises, au contact de la table. Ces rouleaux sont réglables en hauteur, suivant l'épaisseur de la plaque, pour permettre l'usinage de différentes épaisseurs de plaques.

Suivant le procédé de l'invention, les plaques à travailler 14 sont amenées sur la table et conduites le long de guides 15, 15' jusque sous les fraises 5 qui tournent dans le sens de la flèche 16 (figure 2). La plaque est travaillée "en avalant", ce qui permet d'éviter l'arrachage de la matière travaillée. Les rouleaux assurent une fonction de maintien de la plaque 14 au contact de la table 1, et ainsi corrigent les déformations éventuelles de la plaque, pendant son passage sous les fraises et réalisent une certaine retenue de la plaque à l'encontre de la traction exercée par les fraises. Dans ce mode de réalisation, les rouleaux sont montés fous, de sorte qu'une retenue complémentaire doit être exercée par le servant de la machine. Cette retenue est toutefois facilement exercée même lorsque la plaque est soumise à l'action simultanée de cinq fraises.

En se reportant aux figures 3 et 4, un mode de réalisation préféré d'une fraise utilisable dans le dispositif de l'invention comprend un corps cylindrique 17, sur lequel sont montés des supports 18 de forme triangulaire. Sur chacun de ces supports est montée une lame triangulaire 19, en acier dur, maintenue par une clame 20. Suivant un mode de réalisation préféré de l'invention, il est formé sur l'arbre 4 un méplat 21, avec lequel coopèrent des vis de pression 22 solidaires du corps 17 des fraises, pour maintenir celles-ci en place sur l'arbre 4. De la sorte, l'emplacement des fraises 5 sur l'arbre 4 peut aisément être modifié pour travailler des plaques de dimensions différentes. Des trous borgnes peuvent également être prévus sur l'arbre 4 en vue de déterminer, par coopération avec l'extrémité des vis de pression 22 des fraises, des emplacements préférentiels de calage des dites fraises 5.

A titre d'exemple, on a représenté en figure 5 un corps parallélépipédique connu, pouvant être réalisé à l'aide du procédé et du dispositif de l'invention. Ainsi qu'on le remarquera, ce corps parallélépipédique est réalisé par pliage d'une plaque comportant trois rainures à 90° et deux chanfreins, le collage des chanfreins et des parois des rainures assurant la constitution du corps parallélépipédique désiré, dont la face non rainurée constitue la face extérieure.

Suivant le mode de réalisation représenté en figure 6, les rouleaux 13, 13' sont commandés en rotation par un moto-réducteur 23 actionnant le rouleau 13' par un dispositif de transmission schématiquement représenté par une poulie 24, une courroie 25, une poulie, non visible, sur l'arbre 13', ainsi qu'un pignon 26 tendeur de brin, destiné à permettre le réglage en hauteur du rouleau 13'. Le rouleau 13' et le rouleau 13 sont solidaires en rotation par l'intermédiaire de poulies 27, 27' et d'une courroie 28.

La vitesse de rotation à la sortie du moto-réducteur 23 est choisie pour que la vitesse linéaire de la périphérie des rouleaux 13, 13' corresponde à l'avance désirée de la plaque. Cette avance dépendra notamment de l'épaisseur de la plaque, et du degré de polymérisation de la matière travaillée. C'est ainsi qu'une plaque fraîchement réalisée devra être usinée à plus faible vitesse qu'une plaque plus ancienne, dans laquelle la polymérisation s'est effectuée complètement.

Suivant le mode de réalisation préféré de l'invention représenté en figure 6, la surface des rouleaux 13, 13' présente des zones de friction 29, permettant aux rouleaux d'assurer la totalité de la fonction de retenue de la plaque.

L'invention fournit ainsi un dispositif extrêmement simple et d'une grande souplesse d'utilisation, permettant la réalisation de rainures de grande netteté, sans arrachage de matière, et de dimensions constantes, alors que le sommet de la rainure est maintenu à une distance constante de la face de la plaque opposée à celle sur laquelle sont formées les rainures, en dépit des tolérances de fabrication de la plaque.

Ces caractéristiques assurent au produit obtenu une qualité constante et élevée, qui n'a pu être réalisée par d'autres dispositifs.

L'invention a été décrite et illustrée à simple titre d'exemple nullement limitatif, et il va de soi que de nombreuses modifications peuvent être apportées à sa réalisation sans s'écarter de son esprit.

**0082911**

REVENDICATIONS.

1. Procédé de réalisation de rainures dans des plaques de matière rigide à faible densité, ayant tendance à l'arrachage, dans lequel la plaque est posée sur une table fixe, sur laquelle elle se déplace, en étant guidée, à l'encontre d'au moins une fraise dont la partie active présente le profil de la rainure à réaliser, caractérisé en ce que la rainure est réalisée par un fraisage de profil en avalant, alors que la plaque est soumise à une action de retenue au cours de son avance sur la table.

2. Procédé suivant 1, caractérisé en ce que plusieurs rainures sont réalisées simultanément dans la plaque.

3. Dispositif pour la réalisation du procédé suivant 1, caractérisé en ce qu'il comprend une table fixe (1) présentant un moyen de guidage (15, 15') de la plaque ainsi que, au-dessus de et parallèlement à la dite table, dans le sens transversal par rapport à l'avancement de la plaque, un support (4) dont est solidaire au moins une fraise (5) disposée de profil et entraînée pour réaliser un fraisage en avalant, au moins un organe de pression (13) étant prévu en amont de l'outil pour maintenir la plaque au contact de la table au cours de son avance.

4. Dispositif suivant 3, caractérisé en ce que le support est un arbre (4) entraîné par un moteur (6), dont au moins une fraise (5) est solidaire en rotation.

5. Dispositif suivant 3 et 4, caractérisé en ce que le support est un arbre (4) s'étendant sur toute la largeur de la table, sur lequel sont montées plusieurs fraises (5, 5', 5", 5"', 5"") convenablement espacées pour réaliser des rainures parallèles convenablement écartées.

6. Dispositif suivant 3 à 5, caractérisé en ce que l'arbre (4) présente longitudinalement un méplat (21) et en ce que les fraises (5) sont déplaçables sur l'arbre et comportent des vis de pression (22) destinées à coopérer avec le méplat de l'arbre pour assurer le calage des fraises sur le dit arbre, à l'emplacement voulu.

7. Dispositif suivant 6, caractérisé en ce que des trous borgnes sont formés dans l'arbre, pour coopérer avec les vis de pression des fraises afin de déterminer des emplacements préférentials de calage des fraises.

8. Dispositif suivant l'une quelconque des revendications 3 à 7, caractérisé en ce que le moyen de pression est constitué par un rouleau (13) s'étendant transversalement au sens d'avancement de la plaque.

9. Dispositif suivant 8, caractérisé en ce qu'un second rouleau (13') est prévu en aval des fraises.

10. Dispositif suivant 9, caractérisé en ce que les rouleaux (13, 13') sont entraînés en rotation par un moto-réducteur (29) à vitesse de sortie réglable, alors que leur surface présente des éléments de friction (29) destinés à permettre l'entraînement de la plaque par les rouleaux (13, 13'), assurant ainsi, outre le maintien de la plaque au contact de la table, la retenue de la plaque au cours de son usinage.

0082911

FIG.1

FIG.2

FIG.3  FIG.4  FIG.5

FIG.6

Office européen
des brevets

**RAPPORT DE RECHERCHE EUROPEENNE**

**0082911**
Numéro de la demande

EP 81 87 0056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | GB - A - 911 658 (SVENSKA TAND-STICKS) <br><br> * figures, page 2, lignes 35-47 * <br><br> -- | <br><br> 1-10 | B 23 C 3/30 |
| X,Y | US - A - 4 215 613 (ANDERSON) <br><br> * figures * <br><br> -- | <br><br> 1,2 | |
| X,Y | FR - A - 343 959 (S.A. TRAVAIL ELECTRIQUE DE METAUX) <br><br> * figures * <br><br> -- | <br><br><br> 1,2 | |
| X,Y | US - A - 2 968 326 (MYERS) <br><br> * colonne 2, lignes 35-42; figures * <br><br> -- | <br><br> 1-10 | **DOMAINES TECHNIQUES RECHERCHES (Int Cl. ³)** <br><br> B 29 C <br> B 26 D <br> B 23 C <br> B 27 G |
| X,Y | GB - A - 1 282 198 (BLAWS) <br><br> * figures; page 1, lignes 55-68 * <br><br> -- | <br><br> 2,3,8-10 | |

Le présent rapport de recherche a été établi pour toutes les revendications

| Lieu de la recherche | Date d'achèvement de la recherche | Examinateur |
|---|---|---|
| LA HAYE | 09-07-1982 | CORDENIER |

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica- tion concernée | |
| X,Y | <u>US - A - 3 420 142</u> (GALE)<br><br>* figures ; colonne 2, lignes 43-52 *<br><br>------ | 2,3,8- 10 | |
| | | | **DOMAINES TECHNIQUES RECHERCHES (Int. Cl.³)** |

OEB Form 1503.2   06.78